(19) Europäisches Patentamt / European Patent Office / Office européen des brevets

(11) **EP 4 236 558 B1**

(12) **EUROPEAN PATENT SPECIFICATION**

(45) Date of publication and mention
of the grant of the patent:
**03.12.2025 Bulletin 2025/49**

(21) Application number: **21883321.8**

(22) Date of filing: **22.10.2021**

(51) International Patent Classification (IPC):
*H04W 72/12* (2023.01)    *H04W 72/04* (2023.01)
*H04L 5/00* (2006.01)     *H04L 1/00* (2006.01)

(52) Cooperative Patent Classification (CPC):
**H04L 5/0055; H04L 1/1671; H04L 1/1854;
H04L 1/1861; H04L 1/1896;** H04L 1/1614;
H04L 1/1819; H04L 1/1822; H04W 72/21

(86) International application number:
**PCT/KR2021/014880**

(87) International publication number:
**WO 2022/086254 (28.04.2022 Gazette 2022/17)**

(54) **METHOD AND DEVICE FOR TRANSMITTING AND RECEIVING SIGNAL IN WIRELESS COMMUNICATION SYSTEM**

**VERFAHREN UND VORRICHTUNG ZUM SENDEN UND EMPFANGEN EINES SIGNALS IN EINEM DRAHTLOSKOMMUNIKATIONSSYSTEM**

**PROCÉDÉ ET DISPOSITIF DE TRANSMISSION ET DE RÉCEPTION D'UN SIGNAL DANS UN SYSTÈME DE COMMUNICATION SANS FIL**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2020  KR 20200137777
05.04.2021  KR 20210044272
30.09.2021  KR 20210130236**

(43) Date of publication of application:
**30.08.2023 Bulletin 2023/35**

(73) Proprietor: **LG ELECTRONICS, INC.**
Seoul 07336 (KR)

(72) Inventors:
• **YANG, Suckchel**
Seoul 06772 (KR)
• **KIM, Seonwook**
Seoul 06772 (KR)

(74) Representative: **Frenkel, Matthias Alexander
Wuesthoff & Wuesthoff
Patentanwälte und Rechtsanwalt PartG mbB
Schweigerstraße 2
81541 München (DE)**

(56) References cited:
WO-A1-2020/092264    US-A1- 2019 239 216
US-A1- 2019 261 361    US-A1- 2020 296 716

• ERICSSON: "On PUCCH Remaining Issues", vol. RAN WG1, no. Busan, South Korea; 20180521 - 20180525, 20 May 2018 (2018-05-20), XP051442448, Retrieved from the Internet <URL:http://www.3gpp.org/ftp/Meetings%5F3GPP%5FSYNC/RAN1/Docs/> [retrieved on 20180520]
• ERICSSON: "Summary of Overlapped PUCCH Resources", vol. RAN WG1, no. Busan, South Korea; 20180521 - 20180525, 24 May 2018 (2018-05-24), XP051463293, Retrieved from the Internet <URL:http://www.3gpp.org/ftp/tsg%5Fran/WG1%5FRL1/TSGR1%5F93/Docs> [retrieved on 20180524]
• PANASONIC: "Discussion on PUCCH overlap issues", vol. RAN WG1, no. Busan, Korea; 20180521 - 20180525, 20 May 2018 (2018-05-20), XP051441390, Retrieved from the Internet <URL:http://www.3gpp.org/ftp/Meetings%5F3GPP%5FSYNC/RAN1/Docs/> [retrieved on 20180520]

- **VIVO: "Discussion on short PUCCH for eMBB",
  vol. RAN WG1, no. Busan, Korea; 20180521 -
  20180525, 20 May 2018 (2018-05-20),
  XP051441275, Retrieved from the Internet
  <URL:http://www.3gpp.org/ftp/Meetings%
  5F3GPP%5FSYNC/RAN1/Docs/> [retrieved on
  20180520]**
- **PANASONIC: "Discussion on Intra-UE
  multiplexing and prioritization of different
  priority", vol. RAN WG1, no. e-Meeting; 20201026
  - 20201113, 23 October 2020 (2020-10-23),
  XP051945445, Retrieved from the Internet
  <URL:https://ftp.3gpp.org/tsg_ran/WG1_RL1/
  TSGR1_103-e/Docs/R1-2008955.zip
  R1-2008955.docx> [retrieved on 20201023]**
- **SHARP: "Enhancements on intra-UE UCI
  multiplexing and PUSCH prioritization", vol. RAN
  WG1, no. e-Meeting; 20201026 - 20201113, 24
  October 2020 (2020-10-24), XP051946853,
  Retrieved from the Internet <URL:https://
  ftp.3gpp.org/tsg_ran/WG1_RL1/TSGR1_103-e/
  Docs/R1-2009136.zip R1-2009136.docx>
  [retrieved on 20201024]**
- **ZTE: "Discussion on enhanced intra-UE
  multiplexing", vol. RAN WG1, no. e-Meeting;
  20201026 - 20201113, 1 November 2020
  (2020-11-01), XP052350759, Retrieved from the
  Internet <URL:https://ftp.3gpp.org/tsg_ran/
  WG1_RL1/TSGR1_103-e/Docs/R1-2008824.zip
  R1-2008824 Discussion on enhanced intra-UE
  multiplexing.docx> [retrieved on 20201101]**
- **NOKIA, NOKIA SHANGHAI BELL: "On Rel-17 UL
  intra-UE prioritization and multiplexing
  enhancements of traffic with different priorities",
  3GPP DRAFT; R1-2006340, 3RD GENERATION
  PARTNERSHIP PROJECT (3GPP), MOBILE
  COMPETENCE CENTRE ; 650, ROUTE DES
  LUCIOLES ; F-06921 SOPHIA-ANTIPOLIS
  CEDEX ; FRANCE, vol. RAN WG1, no. e-Meeting;
  20200817 - 20200828, 7 August 2020
  (2020-08-07), Mobile Competence Centre ; 650,
  route des Lucioles ; F-06921 Sophia-Antipolis
  Cedex ; France
  , XP051915311**

**Description**

[Technical Field]

The present disclosure relates to a wireless communication system, and more particularly, to a method and apparatus for transmitting/receiving an uplink/downlink wireless signal in a wireless communication system.

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

Existing methods are disclosed in ERICSSON: "On PUCCH Remaining Issues", 3GPP DRAFT; R1-1807252, 20 May 2018, ERICSSON: "Summary of Overlapped PUCCH Resources", 3GPP DRAFT; R1-1807662, 24 May 2018, PANASONIC: "Discussion on PUCCH overlap issues", 3GPP DRAFT; R1-1806180, 20 May 2018, and VIVO: "Discussion on short PUCCH for eMBB", 3GPP DRAFT; R1-1806060, 20 May 2018.

[Disclosure]

[Technical Problem]

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

The invention is defined by the appended claims.

[Advantageous Effects]

According to the present disclosure, wireless signal transmission and reception may be efficiently performed in a wireless communication system.

The present disclosure is not limited to what has been particularly described hereinabove and other advantages of the present disclosure will be more clearly understood from the following detailed description taken in conjunction with the accompanying drawings.

[Description of Drawings]

The accompanying drawings, which are included to provide a further understanding of the disclosure and are incorporated in and constitute a part of this application, illustrate embodiments of the disclosure and together with the description serve to explain the principle of the disclosure. In the drawings:

FIG. 1 illustrates physical channels used in a 3rd generation partnership project (3GPP) system as an exemplary wireless communication system, and a general signal transmission method using the same;
FIG. 2 illustrates a radio frame structure;
FIG. 3 illustrates a resource grid of a slot;
FIG. 4 illustrates exemplary mapping of physical channels in a slot;
FIG. 5 illustrates an exemplary acknowledgment/negative acknowledgment (ACK/NACK) transmission process;
FIG. 6 illustrates an exemplary physical uplink shared channel (PUSCH) transmission process;

FIG. 7 illustrates an example of multiplexing control information in a PUSCH;

FIGS. 8 and 9 are diagrams for explaining PUCCH transmission according to an embodiment of the present disclosure.

FIG. 10 illustrates a signal transmission and reception method according to an embodiment of the present disclosure;

FIGS. 11 to 14 illustrate an example of a communication system 1 and wireless devices applied to the present disclosure; and

FIG. 15 illustrates an exemplary discontinuous reception (DRX) operation applicable to the present disclosure.

[Mode for Disclosure]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent idea or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

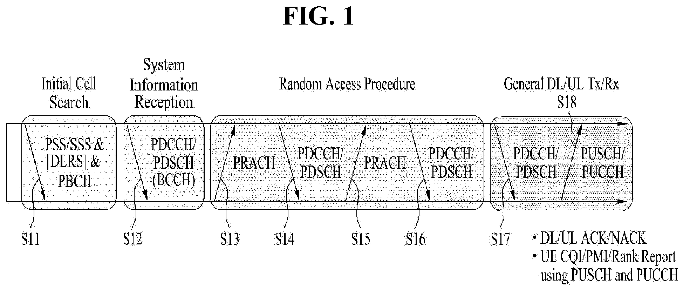

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S11. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S12.

The UE may perform a random access procedure to access the BS in steps S13 to S16. For random access, the UE may transmit a preamble to the BS on a physical random access channel (PRACH) (S13) and receive a response message for preamble on a PDCCH and a PDSCH corresponding to the PDCCH (S14). In the case of contention-based random access, the UE may perform a contention resolution procedure by further transmitting the PRACH (S15) and receiving a PDCCH and a PDSCH corresponding to the PDCCH (S16).

After the foregoing procedure, the UE may receive a PDCCH/PDSCH (S17) and transmit a physical uplink shared channel (PUSCH)/physical uplink control channel (PUCCH) (S18), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

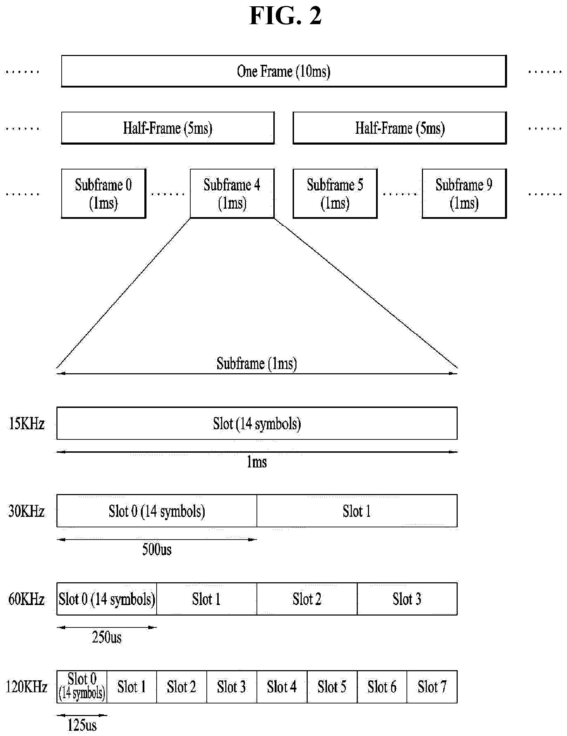

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{frame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

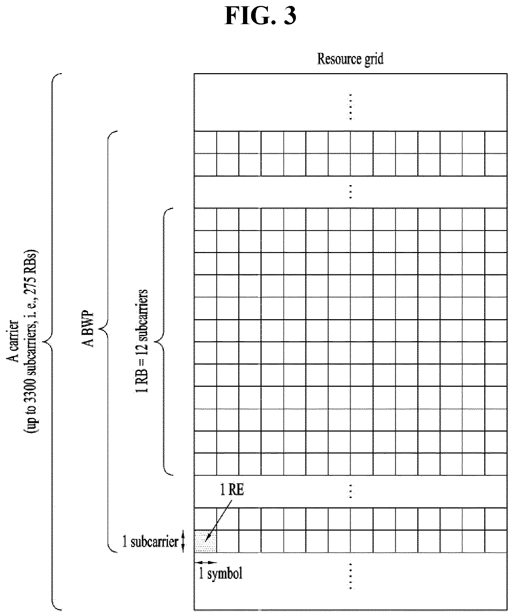

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

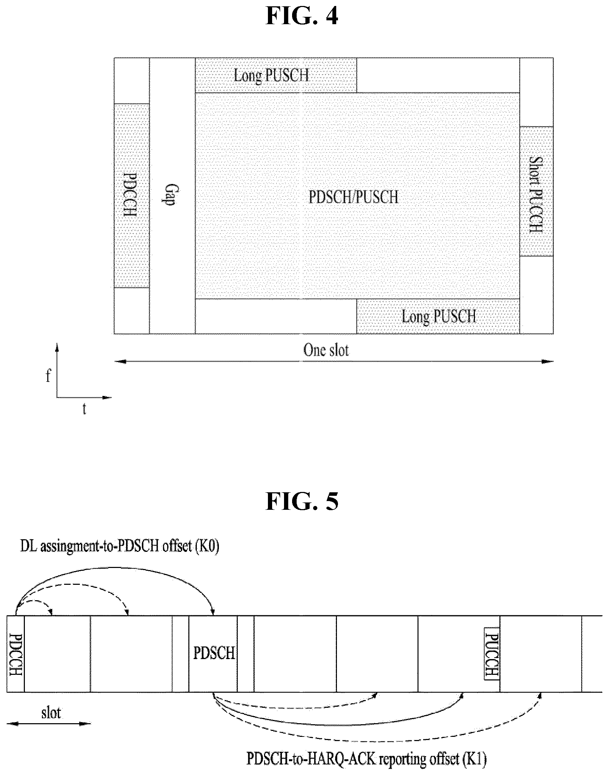

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |

(continued)

| Type | Search Space | RNTI | Use Case |
|------|-------------|------|----------|
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|-----------|-------|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 - | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

System information (SIB1) broadcast in a cell may include PDSCH-ConfigCommon that is cell-specific PDSCH configuration information. PDSCH-ConfigCommon may include pdsch-TimeDomainAllocationList that is a list of parameters related to time domain resource allocation of a PDSCH (or a look-up table). pdsch-TimeDomainAllocationList may include up to 16 entries (or rows) obtained by jointly encoding {K0, PDSCH mapping type, PDSCH start symbol and length (SLIV)}. Separately from (in addition to) pdsch-TimeDomainAllocationList configured through PDSCH-ConfigCommon, pdsch-TimeDomainAllocationList may also be provided through PDSCH-Config that is UE-specific PDSCH configuration. The UE-specifically configured pdsch-TimeDomainAllocationList may have a structure such as UE-commonly provided pdsch-TimeDomainAllocationList. With regard to K0 and SLIV of pdsch-TimeDomainAllocationList, the following description including FIG. 5 may be referenced.

The PUCCH delivers uplink control information (UCI). The UCI includes the following information.

- SR(Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ symb | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 may carry UCI with a maximum size of 2 bits and may be transmitted (without modulation) based on sequence selection. In detail, a UE may transmit one sequence among a plurality of sequences through a PUCCH of PUCCH format 0 and may transmit specific UCI to a BS. The UE transmits a PUCCH of PUCCH format 0 within a PUCCH resource for corresponding SR configuration only when transmitting a positive SR. Differently from other PUCCH formats, PUCCH format 0 may be configured with only a UCI signal (i.e., selected sequence) without a DMRS. In the frequency domain, PUCCH format 0 may be mapped to a single RB. A total of 12 cyclic shifts may be used for multiplexing. Multiplexing capacity may be determined depending on a payload, and for example, when one UE intends to transmit one A/N, 2 CS values need to be allocated per UE, and thus a total of 6 UEs may be multiplexed based on a total of 12 CS values. When a UE intends to transmit 2 A/Ns and a SR, 8 CS values are required, and thus only one UE may transmit PUCCH format 0 on a corresponding resource. For example, (i) when only one A/N is transmitted, a CS value (e.g., $m_{cs}$) $\in$ {0, 6} may be used, and 0 may refer to NACK and 6 may refer to ACK. (ii) When only 2 A/Ns (i.e., A/N1 or A/N2) are transmitted, a CS value $\in$ {0, 3, 6, 9} may be used, and these may mean {(N, N), (N, A), (A, A), (A, N)}, respectively. (iii) When only (positive) SR is transmitted, a CS value 0 may be used. (iv) When one A/N and SR are transmitted, a CS value $\in$ {0, 3, 6, 9} may be used, and there may mean {(N, Negative(-) SR), (N, +SR), (A, -SR), (A, +SR)}, respectively. The BS and the UE may distinguish between (ii) and (iv) based on the number of A/Ns to be reported at the corresponding timing. (v) When 2 A/Ns and SR are transmitted, a CS value $\in$ {0, 1, 3, 4, 6, 7, 9, 10} may be used, and these may mean {(N,N,-SR), (N,N,+SR), (N,A,-SR), (N,A,+SR), (A,A,-SR), (A,A,+SR), (A,N,-SR), (A,N,+SR)}, respectively. When 8 CS values are used, errors may occur due to CS value confusion, and generally, (e.g., As described later, unless a priority in relation to URLLC is to be considered) it may be preferable to minimize inefficiency that the error occurs in SR rather than A/N, adjacent CS values may be configured to the same A/N combination and different +/- SR values. The CS values exemplified in (i) to (v) above may be understood to correspond to parameter $m_{cs}$ in Table 6/7 below or may also be understood as a final CS value ($\alpha = m_{cs} + m_0$) in the case of parameter $m_0 = 0$ in Table 6/7.

A payload (UCI) of PUCCH format 1 may be carried for A/N of up to 2 bits in size, and a modulation symbol of UCI (e.g., BPSK or QPSK) may be spread by an orthogonal cover code (OCC) (which is configured differently depending on whether to perform frequency hopping) in the time domain. Similar to PUCCH format 0, PUCCH format 1 may carry A/N and/or SR of up to 2 bits, but in the case of PUCCH format 1, a resource selection scheme may be used instead of sequence selection. That is, A/N(s) and/or (+)/(-)SR are indicated from a combination of a modulation symbol and resource selection.

Accordingly, (i) when there is no A/N to be transmitted and the UE intends to transmit only (+)SR, the UE may transmit PUCCH format 1 corresponding to SR (only) through a SR PUCCH resource allocated for SR. (ii) When the UE intends to transmit only A/N (s) without (+)SR, the UE may transmit PUCCH format 1 corresponding to A/N(s) (only) through HARQ PUCCH resource allocated for A/N. When the same PUCCH resource corresponds to all of periodic SR opportunity and A/N timing, a combination of A/N(s) and (+)/(-)SR may be transmitted. (iii) A UE that intends to transmit (+)SR and A/N(s) may map a modulation symbol representing A/N(s) on a SR PUCCH resource, and (iv) a UE that intends to transmit (-)SR and A/N(s) may map a modulation symbol representing A/N(s) on a HARQ PUCCH resource. A DMRS may be transmitted in a symbol in which a modulation symbol is not transmitted (i.e., which is Time Division Multiplexed (TDMed) and transmitted). CDM between a plurality of PUCCH resources (which complies with PUCCH format 1) may be supported (in the same RB) by applying CS(Cyclic Shift)/OCC(Orthogonal Cover Code) to both the UCI and the DM-RS. In the frequency domain, PUCCH format 1 may be mapped to a single RB. For multiplexing, 12 cyclic shifts and up to 7 OCCs may be used. Multiplexing capacity may vary depending on a PUCCH duration, and for example, for a PUCCH duration of 14 symbols, a total of 7 symbols may be used for a payload of PUCCH format 1, and if frequency hopping is not used, 7 OCCs may be used for a payload of PUCCH format 1 based on 7 symbols. In consideration of the maximum multiplexing capacity, up to 84 PUCCH formats 1 may be multiplexed on the same PUCCH resource by multiplying 12 CSs and 7 OCCs. If the length of the payload is N symbols, N OCCs may be used to multiplex PUCCH format 1. A parameter $m_0$ (i.e., initial CS value) in Table 6/7 may be used for PUCCH format 1, but $m_{cs}$ may not be used for PUCCH format 1. UCI information (e.g., a combination of A/N and SR) indicating $m_{cs}$ in PUCCH format 0 may be represented by a combination of Modulation and Resource Selection in PUCCH format 1.

PUCCH format 2 carries UCI with a bit size greater than 2 bits, and a modulation symbol (e.g., QPSK) is transmitted with DMRS and FDM (Frequency Division Multiplexing). IFFT without DFT is applied to a UCI bit of the encoded PUCCH format 2 (i.e., CP-OFDM). The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. A modulation symbol (e.g., pi/2 BPSK or QPSK) and a DMRS are transmitted on different symbols after TDM (Time Division Multiplexing). DFT is also applied to UCI bits of PUCCH format 3 (i.e., DFT-S-OFDM). OCC is applied at a front end of DFT of UCI and CS (or IFDM mapping) is applied to DMRS, thereby performing multiplexing on a plurality of UEs.

PUCCH format 4 supports multiplexing of up to 4 UEs in the same PRBS, and conveys UCI of more than 2 bits. In other words, PUCCH resources of PUCCH format 3 include an OCC. A UCI modulation symbol (e.g., pi/2 BPSK or QPSK) and a DMRS are transmitted on different symbols after TDM (Time Division Multiplexing). DFT is also applied to the encoded UCI bit (i.e., DFT-S-OFDM), and PUCCH format 4 is ttransmitted without multiplexing between UEs. TDM (Time Division Multiplexing) is transmitted on symbols different from the UCI modulation symbol (eg, pi/2 BPSK or QPSK) and DMRS. DFT is also applied to coded UCI bits (i.e., DFT-S-OFDM), and PUCCH format 4 is transmitted without multiplexing between devices.

Table 6 shows a part of section '9.2.3 UE procedure for reporting HARQ-ACK' from NR standard document TS 38.213.

[Table 6]

If a UE transmits a PUCCH with HARQ-ACK information using PUCCH format 0, the UE determines values $m_0$ and $m_{CS}$ for computing a value of cyclic shift $\alpha$ [4, TS 38.211] where $m_0$ is provided by *initialCyclicShift* of *PUCCH-format0* or, if *initialCyclicShift* is not provided, by the initial cyclic shift index as described in Clause 9.2.1 and $m_{CS}$ is determined from the value of one HARQ-ACK information bit or from the values of two HARQ-ACK information bits as in Table 9.2.3-3 and Table 9.2.3-4, respectively.

Table 9.2.3-3: Mapping of values for one HARQ-ACK information bit to sequences for PUCCH format 0

| HARQ-ACK Value | 0 | 1 |
|---|---|---|
| Sequence cyclic shift | $m_{CS} = 0$ | $m_{CS} = 6$ |

Table 9.2.3-4: Mapping of values for two HARQ-ACK information bits to sequences for PUCCH format 0

| HARQ-ACK Value | {0, 0} | {0, 1} | {1, 1} | {1, 0} |
|---|---|---|---|---|
| Sequence cyclic shift | $m_{CS} = 0$ | $m_{CS} = 3$ | $m_{CS} = 6$ | $m_{CS} = 9$ |

If a UE transmits a PUCCH with HARQ-ACK information using PUCCH format 1, the UE is provided a value for $m_0$ by initialCyclicShift of *PUCCH-format1* or, if *initialCyclicShift* is not provided, by the initial cyclic shift index as described in Clause 9.2.1.

Table 7 shows a part of a part of section '9.2.5.1 UE procedure for multiplexing HARQ-ACK or CSI and SR in a PUCCH' from NR standard document TS 38.213.

[Table 7]

If a UE would transmit a PUCCH with positive SR and at most two HARQ-ACK information bits in a resource using PUCCH format 0, the UE transmits the PUCCH in the resource using PUCCH format 0 in PRB(s) for HARQ-ACK information as described in Clause 9.2.3. The UE determines a value of $m_0$ and $m_{CS}$ for computing a value of cyclic shift $\alpha$ [4, TS 38.211] where $m_0$ is provided by *initialcyclicshift* of *PUCCH-format0*, and $m_{CS}$ is determined from the value of one HARQ-ACK information bit or from the values of two HARQ-ACK information bits as in Table 9.2.5-1 and Table 9.2.5-2, respectively.

If the UE would transmit negative SR and a PUCCH with at most two HARQ-ACK information bits in a resource using PUCCH format 0, the UE transmits the PUCCH in the resource using PUCCH format 0 for HARQ-ACK information as described in Clause 9.2.3.

Table 9.2.5-1: Mapping of values for one HARQ-ACK information bit and positive SR to sequences for PUCCH format 0

| HARQ-ACK Value | 0 | 1 |
|---|---|---|
| Sequence cyclic shift | $m_{CS} = 3$ | $m_{CS} = 9$ |

Table 9.2.5-2: Mapping of values for two HARQ-ACK information bits and positive SR to sequences for PUCCH format 0

| HARQ-ACK Value | {0, 0} | {0, 1} | {1, 1} | {1, 0} |
|---|---|---|---|---|
| Sequence cyclic shift | $m_{CS} = 1$ | $m_{CS} = 4$ | $m_{CS} = 7$ | $m_{CS} = 10$ |

If a UE would transmit SR in a resource using PUCCH format 0 and HARQ-ACK information bits in a resource using PUCCH format 1 in a slot, the UE transmits only a PUCCH with the HARQ-ACK information bits in the resource using PUCCH format 1.

If the UE would transmit positive SR in a first resource using PUCCH format 1 and at most two HARQ-ACK information bits in a second resource using PUCCH format 1 in a slot, the UE transmits a PUCCH with HARQ-ACK information bits in the first resource using PUCCH format 1 as described in Clause 9.2.3. If a UE would not transmit a positive SR in a resource using PUCCH format 1 and would transmit at most two HARQ-ACK information bits in a resource using PUCCH format 1 in a slot, the UE transmits a PUCCH in the resource using PUCCH format 1 for HARQ-ACK information as described in Clause 9.2.3.

In Tables 6 and 7, parameter $m_0$ refers to Initial Cyclic Shift, and parameter $m_{cs}$ refers to a CS value (or CS offset) determined according to UCI information. To help understand Tables 6/7, the TS 38.211/TS 38.213 standard document may be referenced.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an ACK/NACK transmission process therefor. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH.
- Time domain resource assignment: Indicates K0 and the starting position (e.g. OFDM symbol index) and length (e.g. the number of OFDM symbols) of the PDSCH in a slot.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

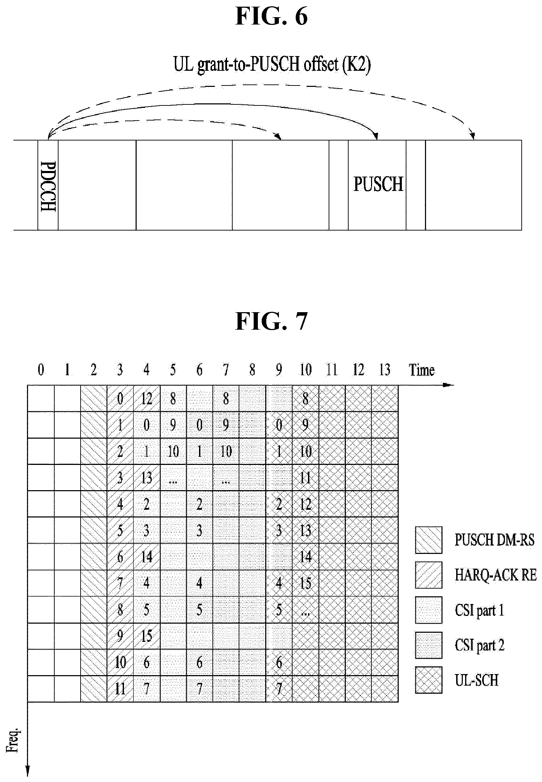

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

FIG. 7 illustrates exemplary multiplexing of UCI in a PUSCH. When a plurality of PUCCH resources overlap with a PUSCH resource in a slot and a PUCCH-PUSCH simultaneous transmission is not configured in the slot, UCI may be transmitted on a PUSCH (UCI piggyback or PUSCH piggyback), as illustrated. In the illustrated case of FIG. 7, an HARQ-ACK and CSI are carried in a PUSCH resource.

With regard to a HARQ-ACK codebook in the NR Rel. 15/16 system, the HARQ-ACK codebook is defined as three code book types including Type-1, Type-2, and Type-3 according to a HARQ-ACK bit (payload) configuration method. The Type-1 codebook is a method of configuring a HARQ-ACK payload according to a combination of a candidate HARQ-ACK timing (K1) set (configured in the corresponding cell for each cell) and a candidate PDSCH occasion (SLIV) set (e.g., a semi-statically fixed-size codebook based on RRC signaling). In the Type-2 codebook, a codebook size may be dynamically changed according to the number of actually scheduled PDSCHs or the corresponding number of resource allocations (e.g., DAI). The Type-3 codebook is a method of configuring a HARQ-ACK payload by mapping a HARQ-ACK bit corresponding to the corresponding HPN for each HARQ process number (HPN) according to the maximum number of HARQ process(s) (configured for each cell) (e.g., one-shot A/N reporting).

**UCI multiplexing for URLLC**

To recently support data transmission/services to which reliability/latency performance is important, such as URLLC, a service/protection priority (e.g., low priority (LP) or high priority (HP)) may be configured semi-statically for the UE (by RRC signaling or the like) or indicated dynamically to the UE (by DCI/MAC signaling).

Specifically, a priority indicator has been introduced to some DCI formats (e.g., DCI format 1_1/1_2 for DL, and DCI format 0_1/0_2 for UL) in NR Rel. 16. When it is configured by higher-layer signaling that the priority indicator will be provided for a corresponding DCI format, the UE performs blind-decoding for the DCI format, assuming the existence of the priority indicator. Without explicit signaling indicating that the priority indicator will be used for the DCI format by higher-layer signaling, the UE performs blind-decoding, assuming that a priority indicator field is not included in the DCI format. When no priority information is provided for a corresponding DL/UL signal, the UE may assume that the DL/UL signal has the LP (e.g., priority index = 0). Those skilled in the art will understand that the priority indicator of DCI is a merely one of various means for indicating/configuring a priority, not the sole method.

In an example of the above prioritization, a lower priority index may be configured/indicated for the LP, and a higher priority index may be configured/indicated for the HP, or a lower bit value (e.g., bit '0') may be configured/indicated for the LP, and a higher bit value (e.g., bit1') may be configured/indicated for the HP.

For example, a priority (e.g., LP or HP) may be configured/indicated for each PUCCH/PUSCH resource configured/indicated for each UCI type (e.g., HARQ-ACK, SR, and/or CSI) or for a corresponding UCI transmission. For example, the LP/HP may be indicated for an HARQ-ACK for a PDSCH by DL grant DCI that schedules the PDSCH. For example, the LP/HP may be indicated for (aperiodic) CSI by DCI (e.g., UL grant DCI scheduling a PUSCH).

In an example, (i) a PUCCH resource set may be configured independently for each priority, and/or (ii) a maximum UCI coding rate for PUCCH transmission may be configured independently for each priority. In an example, (iii) a beta offset $\beta_{offset}$ for encoding UCI on a PUSCH may be configured independently for each priority and/or (iv) an HARQ-ACK codebook type may be configured independently for each priority. At least one or a combination of (i) to (iv) may be used.

In the existing NR standard, when PUCCH format 0 (PFO) carrying HARQ-ACK of 2-bit or less and PUCCH format 0 or PUCCH format 1 (PF1) carrying a SR overlap at the same time, UCI multiplexing on PUCCH is defined to be performed in the same manner as Table 8 below.

[Table 8]

| PUCCH A HARQ-ACK (PFO) | PUCCH B SR (PFO or PF1) | Multiplexing of PUCCH A & B HARQ-ACK+SR (PFO) |
|---|---|---|
| 1-bit | Positive (+) | PF0 {3, 9} |
| 1-bit | Negative (-) | PF0 {0, 6} |
| 2-bit | Positive (+) | PF0 {1, 4, 7, 10} |

(continued)

| PUCCH A HARQ-ACK (PFO) | PUCCH B SR (PFO or PF1) | Multiplexing of PUCCH A & B HARQ-ACK+SR (PFO) |
|---|---|---|
| 2-bit | Negative (-) | PF0 {0, 3, 6, 9} |

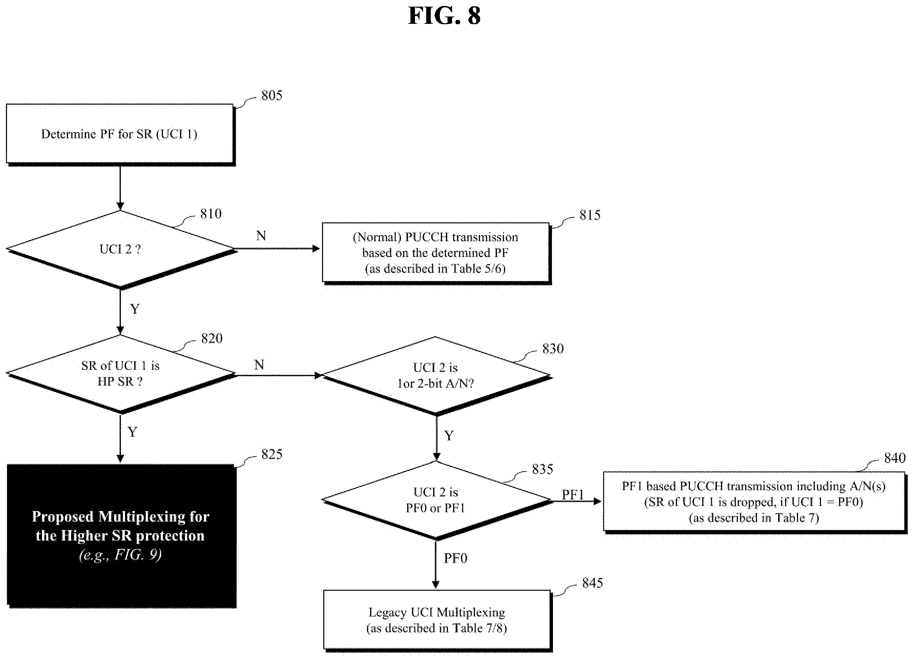

Referring to FIG. 8,

1) In the case in which HARQ-ACK has 1-bit (which is referred to as "multiplexing between 1-bit HARQ-ACK and SR"):

A. When a SR is negative, HARQ-ACK is transmitted based on a sequence cyclic shift value $m_{CS} \in \{0, 6\}$ on HARQ-ACK PF0.

B. When a SR is positive, HARQ-ACK is transmitted based on a sequence cyclic shift value $m_{CS} \in \{3, 9\}$ on HARQ-ACK PF0.

2) In the case in which HARQ-ACK has 2-bit (which is referred to as "multiplexing between 2-bit HARQ-ACK and SR"):

A. When a SR is negative, HARQ-ACK is transmitted based on a sequence cyclic shift value $m_{CS} \in \{0, 3, 6, 9\}$ on HARQ-ACK PF0.

B. When a SR is positive, HARQ-ACK is transmitted based on a sequence cyclic shift value $m_{CS} \in \{1, 4, 7, 10\}$ on HARQ-ACK PF0.

3) A cyclic shift value (parameter $\alpha$ in Table 6/7) of final multiplexed HARQ-ACK (+ SR) may be determined as a value obtained by adding an initial cyclic shift value (parameter m0 in Table 6/7) to a sequence cyclic shift value (parameter $m_{CS}$ in Table 6/7)

In a situation in which SR transmission (e.g., PUCCH B in Table 8) and HARQ-ACK to be multiplexed (e.g., PUCCH A in Table 8) have 2-bit, (candidate) sequence cyclic shift values ($m_{cs}$) to be used/transmitted when a SR is negative and positive may be excessively adjacent to each other (e.g., candidate $m_{cs}$ values of $\{1, 4, 7, 10\}$ related to (+) SR, and the minimum interval between candidate $m_{cs}$ values of $\{0, 3, 6, 9\}$ related to (-)SR is 1), and thus a BS receiving a corresponding PF0 sequence multiplexed with A/N + SR (in a poor channel condition) may confuse an applied cyclic shift value and cause a SR detection error (e.g., (+)SR is mistaken for (-)SR or (-)SR is mistaken for (+)SR due to confusion between CS values 0/1, confusion between 3/4, confusion between 6/7, and/or confusion between 9/10 cause (+)SR). When SR transmission (e.g., PUCCH B in Table 8) is HP, there is an issue in which SR confusion degrades the reliability and low-latency performance required of HP.

Conventionally, when PF1 carrying HARQ-ACK of 2-bit or less and PF0 carrying a SR overlap at the same time, a UE is defined to drop PF0 transmission for carrying a (positive) SR and to transmit only HARQ-ACK (without a SR) on HARQ-ACK PF1. However, if the dropped SR transmission is configured to HP, there is a problem in that reliability and low-latency performance required for HP are degraded due to SR drop. For example, if the UE drops HP SR transmission with a high priority (e.g., if the SR is dropped using the existing method), UL resources are allocated through the SR, and latency may be induced in PUSCH scheduling/transmission that the UE intended to transmit. There is a problem that such an operation of the UE does not meet the purpose/effect of URLLC.

Hereinafter, the present disclosure proposes a UCI multiplexing transmission method (on the same PUCCH) between corresponding HARQ-ACK and a SR when a HARQ-ACK PUCCH resource and a resource configured with a SR PUCCH overlap at the same time (e.g., the same slot, the same sub-slot, or the same symbol) in a situation in which SR transmission is configured with HP. HARQ-ACK transmission may be configured/indicated with LP (or HP).

The case in which a first signal and a second signal overlap at the same time may include, but is not limited to, the case in which a resource for the first signal and a resource for the second signal completely overlap with each other. For example, the case in which the first signal and the second signal overlap with each other at the same time may be understood to encompass the case in which a resource for the first signal and a resource for the second signal at least partially overlap with each other (configured/indicated/scheduled to at least partially overlap with each other) in the time domain. Hereinafter, specific channel/signal transmission of a UE may be interpreted as specific channel/signal reception of a BS.

**[Proposal 1] Combination between HARQ-ACK PFO and SR** PF0 **or SR PF1**

1) When HARQ-ACK feedback is configured with a Type-1 (semi-static) codebook, HARQ-ACK of 2-bit or less is always 1-bit HARQ-ACK (corresponding to the case in which only one fallback DL DCI format or one SPS PDSCH is received), and thus in this case, the existing method described in Table 8 ("multiplexing between 1-bit HARQ-ACK and SR") may be applied at it is. This is because, when HARQ-ACK has 1-bit, SR transmission performance is not degraded.

   A. When receiving only two SPS PDSCHs, a UE:

   - Opt 1) With respect to specific HARQ-ACK of two corresponding HARQ-ACKs (e.g., One HARQ-ACK corresponding to a PDSCH received at the earliest/latest time or a PDSCH with the lowest SPS configuration index), the UE may apply the existing method described in Table 8 (multiplexing between 1-bit HARQ-ACK and SR). In this case, transmission of the remaining HARQ-ACK may be omitted.
   - Opt 2) In the state in which 1-bit HARQ-ACK is generated by bundling two corresponding HARQ-ACKs, the UE may apply the existing method described in Table 8 (multiplexing between 1-bit HARQ-ACK and SR).

2) When HARQ-ACK feedback is configured with a Type-2(dynamic) codebook, HARQ-ACK of 2-bit or less may corresponding to any one of Cases 1 to 4, and in this regard, a HARQ-ACK+ (HP) SR multiplexing method to be applied for each case may be summarized as follows.

   A. Case 1: "When only one PDSCH carrying 2 TBs indicated with DAI=1 is received"
   In the state in which 1-bit HARQ-ACK is generated via (spatial) bundling of 2 HARQ-ACKs for 2 TBs, the existing method described in Table 8 (multiplexing between 1-bit HARQ-ACK and SR) may be applied.
   B. Case 2: "When only one PDSCH carrying 1 TB (single TB) indicated with DAI=1 is received"
   In this case, the following two methods may be considered.

   - Opt 1) With respect to 1-bit HARQ-ACK (for PDSCH (TB)) corresponding to DAI=1, the UE may apply the existing method described in Table 8 (multiplexing between 1-bit HARQ-ACK and SR).
   - Opt 2) In the state in which 1-bit HARQ-ACK is generated by bundling HARQ-ACK corresponding to DAI=1 and HARQ-ACK corresponding to DAI=2 (in this case, since a PDSCH carrying TB(s) indicated with DAI=2 is not received, HARQ-ACK corresponding to DAI=2 is DTX/NACK), the UE may apply the existing method described in Table 8 (multiplexing between 1-bit HARQ-ACK and SR).

   C. Case 3: "When only PDSCH carrying 1-TB indicated with DAI=2 is received"
   In this case, the following two methods may be considered. (e.g., when the UE does not receive a TB/PDSCH indicated with DAI=1)

   - Opt 1) In the state in which HARQ-ACK transmission is dropped, the UE may transmit only a (positive) SR through a SR PUCCH.
   - Opt 2) In the state in which 1-bit HARQ-ACK is generated by bundling HARQ-ACK corresponding to DAI=1 and HARQ-ACK corresponding to DAI=2 (in this case, since a PDSCH carrying TB(s) indicated with DAI=1 is not received, HARQ-ACK corresponding to DAI=1 is DTX/NACK), the UE may apply the existing method described in Table 8 (multiplexing between 1-bit HARQ-ACK and SR).

   D. Case 4: "When only a 1-TB PDSCH indicated with DAI=1 and a 1-TB PDSCH indicated with DAI=2 are received"

The UE may consider the following two methods.

   - Opt 1) In the state in which HARQ-ACK transmission corresponding to DAI=2 is dropped, the UE may apply the existing method described in Table 8 (multiplexing between 1-bit HARQ-ACK and SR) only to 1-bit HARQ-ACK corresponding to DAI=1.
   - Opt 2) In the state in which 1-bit HARQ-ACK is generated by bundling HARQ-ACK corresponding to DAI=1 and HARQ-ACK corresponding to DAI=2, the UE may apply the existing method described in Table 8 (multiplexing between 1-bit HARQ-ACK and SR).

For example, when the received maximum DAI value is DAI=X (where X>1), the UE may multiplex and transmit 1-bit A/N and a SR for a TB corresponding to any one of a plurality of DAI values.

Alternatively, the received maximum DAI value is DAI=X (where X>1), the UE may generate 1-bit A/N by bundling A/Ns for TBs corresponding some of a plurality of DAI values, and may multiplex and transmit the generated 1-bit A/N and a SR.

E. The methods proposed in the above Cases 2/3/4 may be combined and applied using the following method.

- Example 1) Opt 1 of Case 2, Opt 1 of Case 3, and Opt 1 of Case 4 may be combined and applied.
- Example 2) Opt 2 of Case 2, Opt 2 of Case 3, and Opt 2 of Case 4 may be combined and applied.
- Example 3) Opt 1 of Case 2, Opt 2 of Case 3, and Opt 2 of Case 4 may be combined and applied.

3) The above method may be applied to both of the case of a combination of HARQ-ACK PF0 and SR PF0 and the case of a combination of HARQ-ACK PF0 and SR PF1, or the above method may be applied to the case of a combination of HARQ-ACK PF0 and SR PF0, and the following method may be applied to the case in which a combination of HARQ-ACK PF0 and SR PF1 (differently from the aforementioned existing method).

A. When HARQ-ACK has 1-bit

i. When a SR is negative

1. HARQ-ACK may be transmitted based on a sequence cyclic shift value $m_{cs} \in \{0, 6\}$ on HARQ-ACK PF0.

ii. When a SR is positive

1. HARQ-ACK may be transmitted in the form in which a BPSK modulation symbol is mapped to a sequence on SR PF1 (e.g., BPSK modulation may be used in an HARQ-ACK signal).

B. When HARQ-ACK has 2-bit

i. When a SR is negative

1. HARQ-ACK may be transmitted based on a sequence cyclic shift value $m_{cs} \in \{0, 3, 6, 9\}$ on HARQ-ACK PF0.

ii. When a SR is positive:

1. HARQ-ACK may be transmitted in the form in which a QPSK modulation symbol is mapped to a sequence on SR PF1 (e.g., QPSK modulation may be used in an HARQ-ACK signal)

C. Oppositely to the A/B methods, it may be understood by one of ordinary skill in the art that $m_{cs} \in \{3, 9\}/\{1, 4, 7, 10\}$-based HARQ-ACK is performed for a positive SR and that HARQ-ACK transmission is performed in the form of corresponding modulation symbol mapping for a negative SR.

**[Proposal 2] <u>Combination between HARQ-ACK PF1 and SR PF0</u>**

1) Basically, in the state the following methods may be applied to HARQ-ACK of 2-bit or less to generate 1-bit HARQ-ACK, a QPSK modulation symbol generated based on the corresponding 1-bit HARQ-ACK and 1-bit (negative or positive) SR may be mapped to a sequence on HARQ-ACK PF1.

A. In this case, the QPSK modulation symbol may be generated using a method of mapping HARQ-ACK to MSB and mapping a SR to a LSB or oppositely mapping a SR to a MSB and mapping HARQ-ACK to LSB.

2) First, when HARQ-ACK feedback is configured with a Type-1 codebook, HARQ-ACK of 2-bit or less is always 1-bit HARQ-ACK (corresponding to the case in which only one fallback DL DCI format or one SPS PDSCH is received), and thus the corresponding 1-bit HARQ-ACK and the SR are mapped/transmitted on HARQ-ACK PF1.

A. When only two SPS PDSCHs are received,

- Opt 1) With respect to only one specific HARQ-ACK of two corresponding HARQ-ACKs (e.g., corresponding to a PDSCH received at the earliest/latest time or a PDSCH with the lowest SPS configuration index), the corresponding 1-bit HARQ-ACK and the SR may be mapped/transmitted on HARQ-ACK PF1. (in this case, transmission of the remaining HARQ-ACK may be dropped)
- Opt 2) In the state in which 1-bit HARQ-ACK is generated by bundling two corresponding HARQ-ACKs, the corresponding 1-bit HARQ-ACK and the SR may be mapped/transmitted on HARQ-ACK PF1.

3) Next, when HARQ-ACK feedback is configured with a Type-2 codebook, HARQ-ACK of 2-bit or less may be divided into the following 4 cases, and a method of generating 1-bit HARQ-ACK for each case may be proposed as follows.

A. Case 1: "When only one PDSCH carrying 2 TBs indicated with DAI=1"
In this case, in the state in which 1-bit HARQ-ACK is generated via (spatial) bundling of HARQ-ACK for the 2 TBs, the corresponding 1-bit HARQ-ACK and the SR may be mapped/transmitted on HARQ-ACK PF1.
B. Case 2: "When only one PDSCH carrying 1 TB (single TB) indicated with DAI=1 is received"
In this case, the following two methods may be considered.

- Opt 1) With respect to 1-bit HARQ-ACK (for PDSCH (TB)) corresponding to DAI=1, the corresponding 1-bit HARQ-ACK and the SR may be mapped/transmitted on HARQ-ACK PF1.
- Opt 2) In the state in which 1-bit HARQ-ACK is generated by bundling HARQ-ACK corresponding to DAI=1 and HARQ-ACK corresponding to DAI=2 (in this case, since a PDSCH carrying TB(s) indicated with DAI=2 is not received, HARQ-ACK corresponding to DAI=2 is DTX/NACK), the corresponding 1-bit HARQ-ACK and the SR may be mapped/transmitted on HARQ-ACK PF1.

C. Case 3: "When only one PDSCH carrying 1-TB indicated with DAI=2 is received"
(For example, when the UE does not receive a TB/PDSCH indicated with DAI=1) in this case, the following two methods may be considered.

- Opt 1) In the state in which HARQ-ACK transmission is dropped, the UE may transmit only a (positive) SR through a SR PUCCH.
- Opt 2) In the state in which 1-bit HARQ-ACK is generated by bundling HARQ-ACK corresponding to DAI=1 (in this case, since a PDSCH carrying TB(s) indicated with DAI=1 is not received, HARQ-ACK corresponding to DAI=1 is DTX/NACK) and HARQ-ACK corresponding to DAI=2, the corresponding 1-bit HARQ-ACK and the SR may be mapped/transmitted on HARQ-ACK PF1.

D. Case 4: "When only a PDSCH of 1-TB indicated with DAI=1 and a PDSCH of 1-TB indicated with DAI=2 are received"
In this case, the following two methods may be considered.

- Opt 1) Only for 1-bit HARQ-ACK corresponding to DAI=1, the UE may map/transmit the corresponding 1-bit HARQ-ACK and the SR on HARQ-ACK PF1. The UE may drop HARQ-ACK transmission corresponding to DAI=2 (at least at a corresponding time point).

(Oppositely, only for 1-bit HARQ-ACK corresponding to DAI=2, the UE may map/transmit the corresponding 1-bit HARQ-ACK and the SR on HARQ-ACK PF1. The UE may drop HARQ-ACK transmission corresponding to DAI=1 (at least at a corresponding time point.)
For example, when the received maximum DAI value is DAI=X (where X>1), the UE may map/transmit 1-bit A/N and SR for a TB corresponding to any one of a plurality of DAI values on HARQ-ACK PF1.

- Opt 2) In the state in which 1-bit HARQ-ACK is generated by bundling HARQ-ACK corresponding to DAI=1 and HARQ-ACK corresponding to DAI=2, the UE may map/transmit the corresponding 1-bit HARQ-ACK and the SR on HARQ-ACK PF1.

For example, when the received maximum DAI value is DAI=X (where X>1), the UE may generate 1-bit A/N by bundling A/Ns for TBs corresponding to some of a plurality of DAI values and may map/transmit the generated 1-bit A/N and SR on HARQ-ACK PF1.
E. At least some of Cases 2/3/4 may be combined and applied using the following method.

- Example 1) Opt 1 of Case 2, Opt 1 of Case 3, and Opt 1 of Case 4 may be combined and applied.
- Example 2) Opt 2 of Case 2, Opt 2 of Case 3, and Opt 2 of Case 4 may be combined and applied.
- Example 3) Opt 1 of Case 2, Opt 2 of Case 3, and Opt 2 of Case 4 may be combined and applied.

[Proposal 31 Combination between SR PF0 and HARQ-ACK (PFO or PF1-based HARQ-ACK)

1) A method proposed in Proposal 3 may use a configuration in which, basically, when a SR is negative, HARQ-ACK is mapped and transmitted on a HARQ-ACK PUCCH resource, and when a SR is positive, HARQ-ACK is mapped and transmitted on a SR PUCCH resource. The SR PUCCH resource is a resource allocated for PF0-based HP SR transmission, and even if multiplexing with PF0/1-based HARQ-ACK (UCI B) is not performed, the SR PUCCH resource may refer to a first resource to be used for HP SR (UCI A) transmission. The HARQ-ACK PUCCH resource may refer to an (original) resource allocated for PF0/1-based HARQ-ACK transmission, that is, a second resource to be used to transmit HARQ-ACK (UCI B) even if multiplexing with SF PF0 (UCI A) is not performed. According to Proposal 3, a PF0-based PUCCH may be mapped for transmission of the multiplexed UCI A+B on a resource selected by the UE from the first and second resources. As described in Tables 5/6, etc., conventionally, the same second resource is selected and UCI is performed both for the positive SR and the negative SR, and in contrast, according to Proposal 3, the UE may select any one of the first resource for PF0 and the second resource for PF1 depending on the positive SR or the negative SR and may perform UCI transmission. Like Proposal 3, when (+)/(-) of SR is indicated based on resource selection (selection of any one of the first resource for PF0 and the second resource for PF1), SR detection errors caused by (+)/(-) CS value confusion may be minimized in the existing PF0 (refer to the description of PF0 of Table 5). Accordingly, the method of Proposal 3 may advantageously provide transmission with high reliability with respect to a HP SR multiplexed with (LP) HARQ-ACK.

A. As such, in the positive SR case, the SR PUCCH resource may be selected, and 1-bit or 2-bit HARQ-ACK may be mapped/transmitted based on PF0 on the selected SR PUCCH resource. In this case, there is a need for a method of determining a cyclic shift value (e.g., two candidate cyclic shift values when HARQ-ACK has 1-bit, and four candidate cyclic shift values when HARQ-ACK has 2-bit) of PF0 to be used for 1-bit or 2-bit HARQ-ACK mapping.
B. As an example for determination of the CS value of PF0, a value obtained by adding $m_{cs} \in \{0, 6\}$ for 1-bit HARQ-ACK and $m_{cs} \in \{0, 3, 6, 9\}$ for 2-bit HARQ-ACK to the (existing) initial cyclic shift ($m_0$) value configured on the SR PF0 resource for the case in which only the positive SR is transmitted without HARQ-ACK may be determines as a cyclic shift value (i.e., $\alpha = m_0 + m_{cs}$) on the SR PF0 resource to be used in HARQ-ACK mapping of the positive SR case. For example, multiplexing of PF0-based HP SR (UCI A) + PF0/1-based HARQ-ACK (UCI B) is performed, the multiplexed PUCCH may have PF0 format, and $m_0$ and $m_{cs}$ of the multiplexed PF0 PUCCH may be determined as follows. (i) $m_0$ may be the same value as the existing value (e.g., refer to the description related to Tables 5 to 7), but (ii) a set of candidate $m_{cs}$ values may be a $\{0, 6\}$ or $\{0, 3, 6, 9\}$ set (but not a $\{3, 9\}$ set or a $\{1, 4, 7, 10\}$ set) depending on size of a HARQ-ACK payload.

2) As another method, in the state in which an (original) SR PF0 resource (e.g., a first resource for PF0) configured for the case in which only a positive SR is transmitted without HARQ-ACK is previously given, when there is HARQ-ACK feedback in the positive SR case, the UE may operate to map and transmit HARQ-ACK on an additional PF0 resource (e.g., a third resource for PF0 carrying UCI A+B) determined by adding specific PRB offset (e.g. +1 or -1) to the corresponding original SR PF0 resource (PRB index).

A. Accordingly, in the positive SR case, when there are a SR (e.g., UCI A) and HARQ-ACK feedback (e.g., UCI B) to be multiplexed, the UE may map and transmit the corresponding HARQ-ACK on the additional PF0 resource (e.g., a third resource) (corresponding to UCI A+B). When there is no SR (e.g., UCI A) and HARQ-ACK feedback (e.g., UCI B) to be multiplexed, the UE may transmit only a SR thorough the original SR PF0 resource (e.g., a first resource).
B. In this case, a cyclic shift value to be used in HARQ-ACK mapping on an additional PF0 resource may be determined as a value obtained by adding $m_{cs} \in \{0, 6\}$ for HARQ-ACK having 1-bit and $m_{cs} \in \{0, 3, 6, 9\}$ HARQ-ACK having 2-bit to an initial cyclic shift ($m_0$) value configured in the original SR PF0 resource.

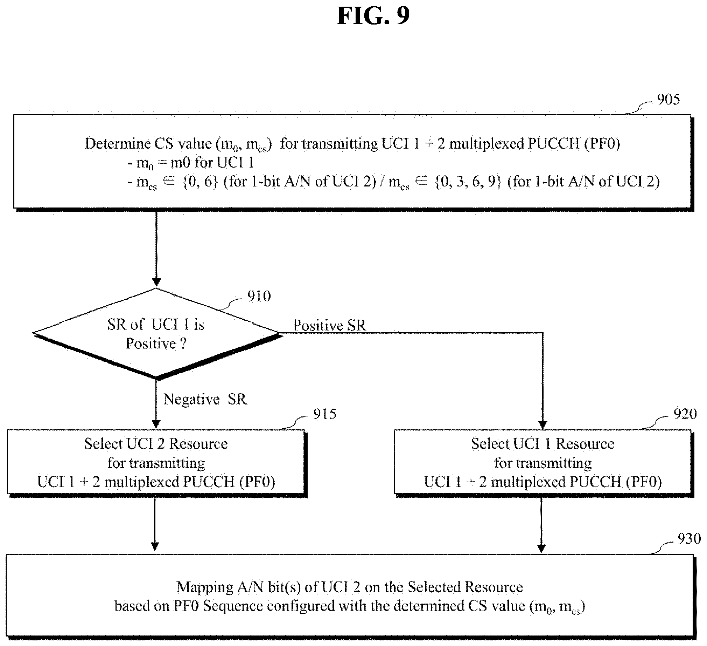

FIG. 8 is a diagram for explaining PUCCH transmission according to an embodiment of the present disclosure. Referring to FIG. 8, when a SR (scheduling request) transmission is required (e.g., when a UL resource allocation request for UL transmission is required), the UE may determine a PUCCH Format (PF) of UC1 for a SR (805). The PF of UC1 may be PF0 or PF1. A UE may check whether UCI 2 (another PUCCH) needs to be transmitted within a time resource (e.g., the same slot, the same sub-slot, or the same symbol) including a PUCCH resource for UCI 1 (810). When there is no UCI 2, the UE may perform PUCCH transmission for a SR based on the determined PF0/1 (as described in Tables 5/6) (815). When UCI 2 needs to be transmitted within the corresponding time resource, a subsequent operation of the UE may vary according to whether UCI 1 for the SR is HP or LP. When UCI 1 is for the HP SR, the UE may multiplex and transmit UCI 1 and UCI 2 using the UCI multiplexing method according to the proposal(s) of the present disclosure (e.g., Proposal 3 related to FIG. 9) (825). The UCI multiplexing method according to the proposal of the present disclosure may provide more reliable and robust SR transmission, that is, a higher level of SR protection (compared with the existing method). When an SR of UCI 1 is not HP and UCI 2 is HARQ-ACK of 2-bit or less (830, Y), an operation of the UE may be determined according to whether UCI 2 is PF0 or PF1 (835). When the UCI 2 is PF0, the UE may multiplex and transmit UCI 1 and UCI 2 using the existing UCI multiplexing method (the UCI multiplexing method of providing a lower level of SR protection) described above in Tables 7/8, etc. (845). UCI 2 is PF1, the UE may perform PF1-based PUCCH transmission (840), and in this case, when a SR of UCI 1 is PF0, the SR may be dropped, and in contrast, when the SR of the UCI 1 is PF1, HARQ-ACK and the SR may be multiplexed in PF 1-based PUCCH transmission (840) (refer to the description related to Table 7).

FIG. 9 is a diagram for explaining multiplexing of a SR (UCI 1) + HARQ-ACK (UCI 2) related to Proposal 3. In FIG. 9, UCI 1 is assumed to be a PF0-based HP SR. UCI 2 is assumed to be PF0/1-based (1 or 2-bit) HARQ-ACK. In some embodiments, a UE may be configured to apply the method of FIG. 9 only to the case in which UCI 2 is LP or may be configured to apply the method of FIG. 9 only to the case in which UCI 2 is HP.

Referring to FIG. 9, for a CS value of a PF0 sequencer may be determined for PF0-based PUCCH transmission in which UCI 1 and UCI 2 are multiplexed (905). The CS value may be determined based on $m_0$ as an initial CS value and $m_{cs}$ as a sequence CS value. For example, the (original) $m_0$ allocated for UCI 1 may be reused as $m_0$. For example, in the state in which there is no UCI 2 to be multiplexed, $m_0$ of a PF0 SR used for UCI 1 may be reused, and the present disclosure is not limited thereto. When UCI 2 is 1-bit HARQ-ACK, $m_{cs}$ may be determined (according to an A/N value) among {0, 6}. When UCI 2 is 2-bit HARQ-ACK, $m_{cs}$ may be determined (according to a combination of A/N1 and A/N2) among {0, 3, 6, 9}. According to the present proposal, a $m_{cs}$ value (set) is determined based on a bit (bit size) of UCI 2 (only) irrespective of whether the SR is Positive or Negative, and thus this may be different from the conventional determination of $m_{cs}$ of PF0. For example, the UE may perform PUCCH resource selection instead of determining the $m_{cs}$ value (set) according to whether the SR is positive or negative. When UCI 1 is a Positive SR, a SR PUCCH resource for UCI 1 (e.g., a PUCCH resource to be used for UCI 1 only if UCI 2 is not present) may be selected (920), and when UCI 2 is a Negative SR, a HARQ-ACK PUCCH resource for UCI 2 (e.g., a PUCCH resource to be used for UCI 2 only if UCI 1 is not present) may be selected (915). The UE may map A/N bit(s) of UCI 2 on the selected resource (930). When A/N bits of UCI 2 are mapped, this may mean that a PF0 sequence generated based on the CS value (905) determined by the UE is mapped on the resource (915 or 920) selected by the UE. Determination of the CS value (905) may be understood as A/N(s) of UCI 2, and resource selection (915 or 920) may be understood as whether a SR is Positive.

### [Proposal 4] 1-bit HP HARQ-ACK and combination between 1-bit LP HARQ-ACK and HP SR

1) For example, the UE may perform multiplexing between PUCCHs having the same priority. As a result of multiplexing between HP PUCCH(s), (i) when HP HARQ-ACK and a HP SR are multiplexed on a HP (HARQ-ACK) PF0 resource, the UE may drop transmission of LP HARQ-ACK (without additional multiplexing), and (ii) when HP HARQ-ACK and a HP SR are multiplexed on a HP (SR) PF1 resource, the UE may operate to modulate LP HARQ-ACK and HP HARQ-ACK to a QPSK symbol and to map/transmit the QPSK symbol on the corresponding HP (SR) PF1 resource.

A. In the former case of (i), transmission of LP HARQ-ACK transmission is dropped because a similar operation to the aforementioned "multiplexing between 2-bit HARQ-ACK and SR" of Table 8 is applied due to a combination of LP HARQ-ACK with HP HARQ-ACK, preventing a problem in which HP SR performance is degraded. Alternatively, in order to reduce the complexity of a UE operation, even in the latter case of (ii), transmission of LP HARQ-ACK (without additional multiplexing) may be dropped.

2) Alternatively, for example, the UE may perform multiplexing between HARQ-ACK PUCCHs having different priorities. (i) When a HP HARQ-ACK resource (in which HP HARQ-ACK and LP HARQ-ACK are multiplexed) is PF0, the UE may perform multiplexing with a subsequent HP SR in the state in which LP HARQ-ACK transmission is dropped, and (ii) when the HP HARQ-ACK resource is PF1, the UE may operate to perform multiplexing with a subsequent HP SR in the state in which LP HARQ-ACK and HP HARQ-ACK are modulated to a QPSK symbol and are mapped on the corresponding HP HARQ-ACK PF1 resource.

A. In the former case of (i), transmission of LP HARQ-ACK is dropped because a similar operation to the aforementioned "multiplexing between 2-bit HARQ-ACK and SR" of Table 8 is applied due to a combination of the corresponding LP HARQ-ACK with HP HARQ-ACK, preventing a problem in which HP SR performance is degraded. Alternatively, in order to reduce the complexity of a UE operation, even in the latter case of (ii), transmission of LP HARQ-ACK (without additional multiplexing) may be dropped.

**[Proposal 51 1-bit HP HARQ-ACK and combination between 1-bit LP HARQ-ACK and LP SR**

1) For example, the UE may perform multiplexing between PUCCHs having the same priority, and in this case, the UE may operate to perform additional multiplexing with subsequent (LP HARQ-ACK and) HP HARQ-ACK in the state in which LP SR transmission is always dropped irrespective of a PUCCH format of LP HARQ-ACK and PUCCH format of a LP SR.

2) Alternatively, the UE may perform multiplexing between HARQ-ACK PUCCHs having different priorities, and in this case, the UE may operate to always drop LP SR transmission irrespective of (a PUCCH format of HP HARQ-ACK and) a PUCCH format of a LP SR in the state in which multiplexing between HP HARQ-ACK and LP HARQ-ACK are performed.

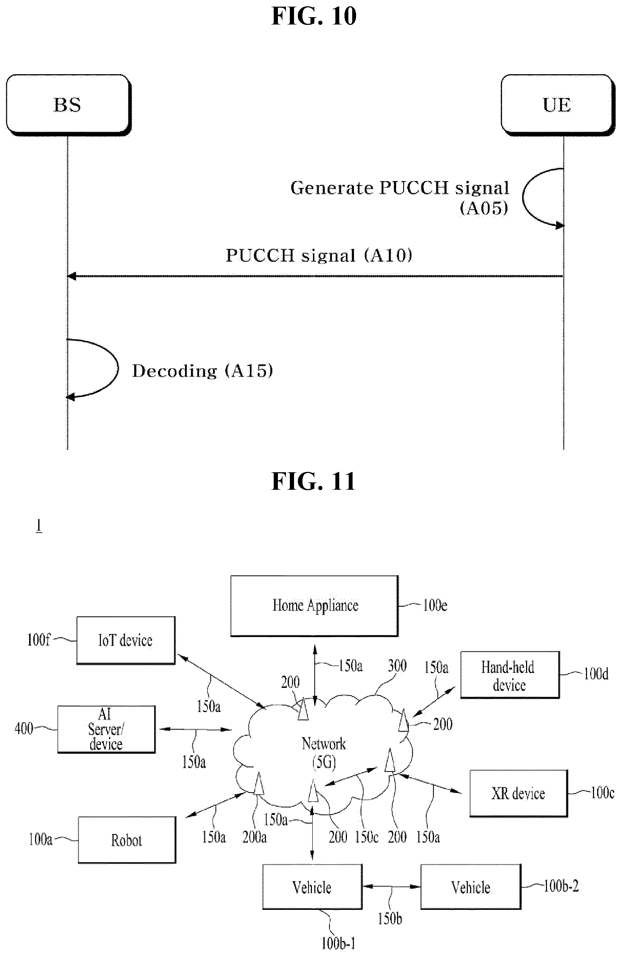

FIG. 10 illustrates an example of implementation of a method of transmitting and receiving a signal according to at least some of the aforementioned Proposals 1 to 5. FIG. 10 is to understand the aforementioned Proposals, and the scope of the present disclosure is not limited to FIG. 10. Redundant descriptions above may be omitted, and the above-described content may be referred to as necessary.

Referring to FIG. 10, the UE may generate a PUCCH signal for multiplexing of a first UCI (uplink control channel) for a SR (scheduling request) and HARQ(hybrid automatic repeat request)-ACK(acknowledgement) on a specific time resource (A05).

The UE may transmit the generated PUCCH signal (A10).

ABS may decode a received PUCCH signal (A15).

Based on that (i) the first UCI for the SR is related to a first PUCCH format, (ii) the HARQ-ACK does not exceed 2-bit, and (iii) the first UCI for the SR has a higher priority among a first priority and a second priority, the UE may determine CS (cyclic shift) for the PUCCH signal, may generate the PUCCH signal for multiplexing of the first UCI and the second UCI based on the determined CS and the first PUCCH format, and may determine a PUCCH resource to which the PUCCH signal is to be mapped, based on whether the SR is a positive SR.

Based on whether the SR is a positive SR or a negative SR, the UE may select any one of a first PUCCH resource related to the first UCI and a second PUCCH resource related to the second UCI as the PUCCH resource to which the PUCCH signal is to be mapped.

The UE may select the first PUCCH resource based on that the SR is a positive SR, or may select the second PUCCH resource based on that the SR is a negative SR.

The CS may be determined based on '$m_0$' representing an initial CS value of the PUCCH signal and '$m_{cs}$' representing a sequence CS value of the PUCCH signal.

'$m_0$' may be configured to the same value as the initial CS value configured in the first UCI for the SR. As a specific example, when '$m_0$' may be configured to the same valuer as the initial CS value to be used when the SR is a positive SR and the first UCI for the positive SR is transmitted without multiplexing with the second UCI for the HARQ-ACK.

'$m_{cs}$' may be determined from one or two or more ACK/NACK (Negative-ACK) values of the second UCI for the HARQ-ACK.

'$m_{cs}$' may be determined based on only one or two or more ACK/NACK (Negative-ACK) values of the second UCI irrespective of whether the SR is a positive SR or a negative SR.

Based on that the first PUCCH format related to the first UCI is NR PUCCH format 0 of 3GPP (3rd generation partnership project), the PUCCH signal may also be configured in NR PUCCH format 0.

'$m_{cs}$' of the PUCCH signal configured with NR PUCCH format 0 may be selected as a candidate $m_{cs}$ value set selected based on the size of the second UCI for the HARQ-ACK irrespective of whether the SR is a positive SR or a negative SR.

Based on that a zie of the second UCI for the HARQ-ACK is 1-bit, the UE may select any one of {0, 6} as '$m_{cs}$' or, based on a size of the second UCI for the HARQ-ACK is 2-bit, the UE may select any one of {0, 3, 6, 9} as '$m_{cs}$'.

The second UCI for the HARQ-ACK may have a lower priority of the first priority and the second priority.

The second UCI for the HARQ-ACK may be NR PUCCH format 0 or NR PUCCH format 1 of 3GPP (3rd generation partnership project).

FIG. 11 illustrates a communication system 1 can be applied to the present disclosure.

Referring to FIG. 11, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

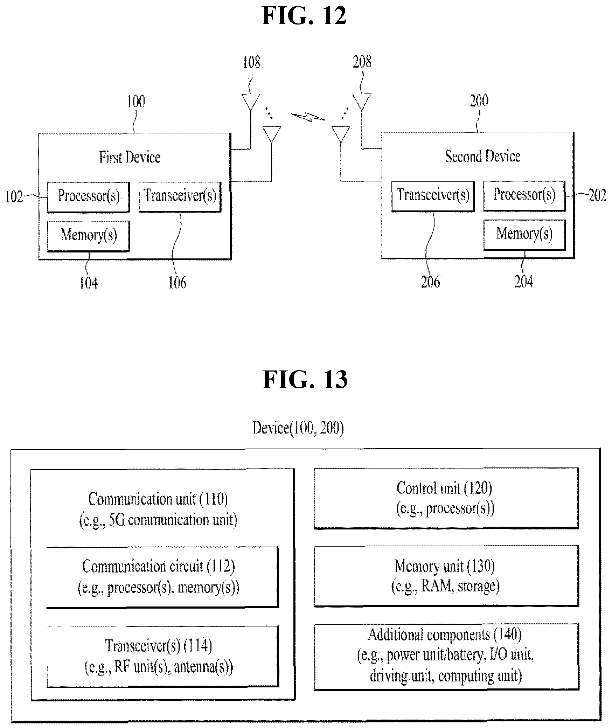

FIG. 12 illustrates wireless devices applicable to the present disclosure.

Referring to FIG. 12, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 11.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 13 illustrates another example of a wireless device applied to the present disclosure. The wireless device may be implemented in various forms according to a use-case/service (refer to FIG. 11).

Referring to FIG. 13, wireless devices 100 and 200 may correspond to the wireless devices 100 and 200 of FIG. 12 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 12. For example, the transceiver(s) 114 may include the one or more transceivers 106 and 206 and/or the one or more antennas 108 and 208 of FIG. 12. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 11), the vehicles (100b-1 and 100b-2 of FIG. 11), the XR device (100c of FIG. 11), the hand-held device (100d of FIG. 11), the home appliance (100e of FIG. 11), the IoT device (100f of FIG. 11), a digital broadcast terminal, a hologram device, a public safety device, an MTC device, a medicine device, a fintech device (or a finance device), a security device, a climate/environment device, the AI server/device (400 of FIG. 11), the BSs (200 of FIG. 11), a network node, etc. The wireless device may be used in a mobile or fixed place according to a use-example/service.

In FIG. 13, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

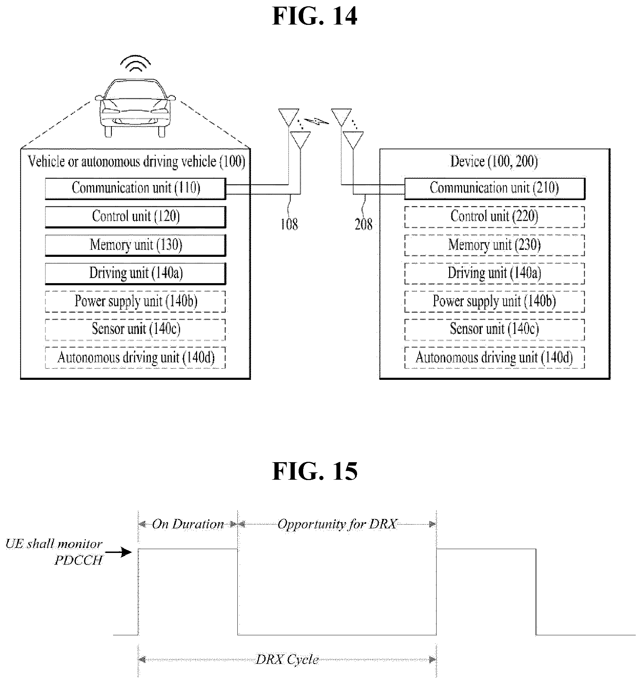

FIG. 14 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 14, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 13, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 15 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 15, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 9 describes a DRX operation of a UE (in the RRC_CONNECTED state). Referring to Table 9, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 9]

|  | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

-   Value of drx-OnDurationTimer: defines the duration of the starting period of the DRX cycle.
-   Value of drx-InactivityTimer: defines the duration of a time period during which the UE is awake after a PDCCH occasion in which a PDCCH indicating initial UL or DL data has been detected
-   Value of drx-HARQ-RTT-TimerDL: defines the duration of a maximum time period until a DL retransmission is received after reception of a DL initial transmission.
-   Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims not by the above description, and all changes coming within the meaning of the appended claims are intended to be embraced therein.

[Industrial Applicability]

The present disclosure is applicable to UEs, BSs, or other apparatuses in a wireless mobile communication system.

**Claims**

1. A method performed by a user equipment, UE, the method comprising:

   generating (A05) an uplink control signal in which a scheduling request and hybrid automatic repeat request-acknowledgement, HARQ-ACK, are multiplexed; and
   transmitting (A10) the uplink control signal,
   wherein the scheduling request is related to a first uplink control channel format supporting 2-bit, and the HARQ-ACK is related to a second uplink control channel format different from the first uplink control channel format,
   wherein cyclic shift for the uplink control signal is determined based on an initial cyclic shift value of the uplink control signal, and
   wherein, based on the HARQ-ACK not exceeding 2-bit, and a priority of the scheduling request being higher than a priority of the HARQ-ACK:
   the uplink control signal including the HARQ-ACK is mapped on a first uplink control channel resource that is determined by applying a specific offset to an uplink control channel resource allocated for the scheduling request, based on that the scheduling request is a positive scheduling request, and
   the uplink control signal including the HARQ-ACK is mapped on a second uplink control channel resource allocated for the HARQ-ACK, based on that the scheduling request is a negative scheduling request.

2. The method of claim 1, wherein the initial cyclic shift value is equal to an initial cyclic shift value used for transmitting the positive scheduling request without multiplexing with the HARQ-ACK.

3. The method of claim 1 or 2, wherein a sequence value for the cyclic shift is determined based on a payload size of the HARQ-ACK.

4. The method of claim 3, wherein:
   based on that the payload size of the HARQ-ACK is 1-bit, the sequence value is selected from {0, 6}.

5. The method of claim 3 or 4, wherein:
   based on that the payload size of the HARQ-ACK is 2-bit, the sequence value is selected from {0, 3, 6, 9}.

6. A non-transitory processor-readable medium having recorded thereon instructions, when executed by a processor of a user equipment, that cause the user equipment to perform the method according to any one of claims 1 to 5.

7. A user equipment comprising:

a transceiver (106),
a memory (104) configured to store the instructions; and
a processor (102) configured to perform operations by executing the instructions,
wherein the operations of the processor (102) include:

generating (A05) an uplink control signal in which a scheduling request and hybrid automatic repeat request-acknowledgement, HARQ-ACK, are multiplexed, and
transmitting (A10) the uplink control signal; and
wherein the scheduling request is related to a first uplink control channel format supporting 2-bit, and the HARQ-ACK is related to a second uplink control channel format different from the first uplink control channel format,
wherein cyclic shift for the uplink control signal is determined based on an initial cyclic shift value of the uplink control signal, and
wherein, based on the HARQ-ACK not exceeding 2-bit, and a priority of the scheduling request being higher than a priority of the HARQ-ACK:
the uplink control signal including the HARQ-ACK is mapped on a first uplink control channel resource that is determined by applying a specific offset to an uplink control channel resource allocated for the scheduling request, based on that the scheduling request is a positive scheduling request, and
the uplink control signal including the HARQ-ACK is mapped on a second uplink control channel resource allocated for the HARQ-ACK, based on that the scheduling request is a negative scheduling request.

8. The user equipment of claim 7, wherein the user equipment is configured to perform the method according to any one of claims 1 to 5.

9. A method performed by a base station, BS, the method comprising:

receiving (A10) an uplink control signal in which a scheduling request and hybrid automatic repeat request-acknowledgement, HARQ-ACK, are multiplexed; and
decoding (A15) the uplink control signal,
wherein the scheduling request is related to a first uplink control channel format supporting 2-bit, and the HARQ-ACK is related to a second uplink control channel format different from the first uplink control channel format,
wherein cyclic shift for the uplink control signal is determined based on an initial cyclic shift value of the uplink control signal, and
wherein, based on the HARQ-ACK not exceeding 2-bit, and a priority of the scheduling request being higher than a priority of the HARQ-ACK:

the uplink control signal including the HARQ-ACK is received on a first uplink control channel resource that is determined by applying a specific offset to an uplink control channel resource allocated for the scheduling request, based on that the scheduling request is a positive scheduling request, and
the uplink control signal including the HARQ-ACK is received on a second uplink control channel resource allocated for the HARQ-ACK, based on that the scheduling request is a negative scheduling request.

10. A base station (200) comprising:

a transceiver (206); and
a processor (202) configured to control the transceiver (206) to receive (A10) an uplink control signal in which a scheduling request and hybrid automatic repeat request-acknowledgement, HARQ-ACK, are multiplexed, and
decode (A15) the uplink control signal,
wherein the scheduling request is related to a first uplink control channel format supporting 2-bit, and the HARQ-ACK is related to a second uplink control channel format different from the first uplink control channel format,
wherein cyclic shift for the uplink control signal is determined based on an initial cyclic shift value of the uplink control signal, and
wherein, based on the HARQ-ACK not exceeding 2-bit, and a priority of the scheduling request being higher than a priority of the HARQ-ACK:

the uplink control signal including the HARQ-ACK is received on a first uplink control channel resource that is determined by applying a specific offset to an uplink control channel resource allocated for the scheduling request, based on that the scheduling request is a positive scheduling request, and

the uplink control signal including the HARQ-ACK is received on a second uplink control channel resource allocated for the HARQ-ACK, based on that the scheduling request is a negative scheduling request.

**Patentansprüche**

1. Ein Verfahren, das von einem Benutzergerät, UE, durchgeführt wird, wobei das Verfahren umfasst:

Erzeugen (A05) eines Uplink-Steuersignals, in dem eine Scheduling-Anforderung und eine hybride automatische Wiederholungsanforderung-Bestätigung, HARQ-ACK, gemultiplext sind; und

Senden (A10) des Uplink-Steuersignals,

wobei die Scheduling-Anforderung sich auf ein erstes Uplink-Steuerkanalformat bezieht, das 2 Bit unterstützt, und die HARQ-ACK sich auf ein zweites Uplink-Steuerkanalformat bezieht, das sich vom ersten Uplink-Steuerkanalformat unterscheidet,

wobei die zyklische Verschiebung für das Uplink-Steuersignal auf der Grundlage eines anfänglichen zyklischen Verschiebungswerts des Uplink-Steuersignals bestimmt wird, und

wobei auf der Grundlage, dass das HARQ-ACK 2 Bit nicht überschreitet und eine Priorität der Scheduling-Anforderung höher ist als eine Priorität des HARQ-ACK:

das Uplink-Steuersignal einschließlich des HARQ-ACK auf eine erste Uplink-Steuerkanalressource abgebildet wird, die durch Anwenden eines bestimmten Offsets auf eine für die Scheduling-Anforderung zugewiesene Uplink-Steuerkanalressource bestimmt wird, basierend darauf, dass die Scheduling-Anforderung eine positive Scheduling-Anforderung ist, und

das Uplink-Steuersignal einschließlich des HARQ-ACK auf eine zweite Uplink-Steuerkanalressource abgebildet wird, die für das HARQ-ACK zugewiesen ist, basierend darauf, dass die Scheduling-Anforderung eine negative Scheduling-Anforderung ist.

2. Verfahren nach Anspruch 1, wobei der anfängliche zyklische Verschiebungswert gleich einem anfänglichen zyklischen Verschiebungswert ist, der zum Senden der positiven Scheduling-Anforderung ohne Multiplexing mit dem HARQ-ACK verwendet wird.

3. Verfahren nach Anspruch 1 oder 2, wobei ein Sequenzwert für die zyklische Verschiebung auf der Grundlage einer Nutzlastgröße des HARQ-ACK bestimmt wird.

4. Verfahren nach Anspruch 3, wobei:
basierend darauf, dass die Nutzlastgröße des HARQ-ACK 1 Bit beträgt, der Sequenzwert aus {0, 6} ausgewählt wird.

5. Verfahren nach Anspruch 3 oder 4, wobei:
basierend darauf, dass die Nutzlastgröße des HARQ-ACK 2 Bit beträgt, der Sequenzwert aus {0, 3, 6, 9} ausgewählt wird.

6. Nicht-transitorisches, von einem Prozessor lesbares Medium, auf dem Befehle aufgezeichnet sind, die, wenn sie von einem Prozessor eines Benutzergeräts ausgeführt werden, das Benutzergerät veranlassen, das Verfahren gemäß einem der Ansprüche 1 bis 5 auszuführen.

7. Benutzergerät, umfassend:

einen Transceiver (106),

einen Speicher (104), der zum Speichern der Befehle konfiguriert ist; und

einen Prozessor (102), der so konfiguriert ist, dass er Operationen durch Ausführen der Befehle ausführt, wobei die Operationen des Prozessors (102) umfassen:

Erzeugen (A05) eines Uplink-Steuersignals, in dem eine Planungsanforderung und eine hybride automatische Wiederholungsanforderung-Bestätigung, HARQ-ACK, gemultiplext sind, und

Senden (A10) des Uplink-Steuersignals; und

wobei die Scheduling-Anforderung sich auf ein erstes Uplink-Steuerkanalformat bezieht, das 2 Bit unterstützt, und die HARQ-ACK sich auf ein zweites Uplink-Steuerkanalformat bezieht, das sich vom ersten Uplink-Steuerkanalformat unterscheidet,

wobei die zyklische Verschiebung für das Uplink-Steuersignal auf der Grundlage eines anfänglichen zyklischen Verschiebungswerts des Uplink-Steuersignals bestimmt wird, und

wobei, basierend darauf, dass das HARQ-ACK 2 Bit nicht überschreitet und eine Priorität der Scheduling-Anforderung höher ist als eine Priorität des HARQ-ACK:

das Uplink-Steuersignal einschließlich des HARQ-ACK auf eine erste Uplink-Steuerkanalressource abgebildet wird, die durch Anwenden eines bestimmten Offsets auf eine für die Scheduling-Anforderung zugewiesene Uplink-Steuerkanalressource bestimmt wird, basierend darauf, dass die Scheduling-Anforderung eine positive Scheduling-Anforderung ist, und

das Uplink-Steuersignal einschließlich des HARQ-ACK auf eine zweite Uplink-Steuerkanalressource abgebildet wird, die für das HARQ-ACK zugewiesen ist, basierend darauf, dass die Scheduling-Anforderung eine negative Scheduling-Anforderung ist.

8. Benutzergerät nach Anspruch 7, wobei das Benutzergerät so konfiguriert ist, dass es das Verfahren gemäß einem der Ansprüche 1 bis 5 ausführt.

9. Verfahren, das von einer Basisstation BS durchgeführt wird, wobei das Verfahren umfasst:

Empfangen (A10) eines Uplink-Steuersignals, in dem eine Scheduling-Anforderung und eine hybride automatische Wiederholungsanforderung-Bestätigung, HARQ-ACK, gemultiplext sind; und
Dekodieren (A15) des Uplink-Steuersignals,
wobei die Scheduling-Anforderung sich auf ein erstes Uplink-Steuerkanalformat bezieht, das 2 Bit unterstützt, und die HARQ-ACK sich auf ein zweites Uplink-Steuerkanalformat bezieht, das sich vom ersten Uplink-Steuerkanalformat unterscheidet,
wobei die zyklische Verschiebung für das Uplink-Steuersignal auf der Grundlage eines anfänglichen zyklischen Verschiebungswerts des Uplink-Steuersignals bestimmt wird, und
wobei, basierend darauf, dass das HARQ-ACK 2 Bit nicht überschreitet und die Priorität der Scheduling-Anforderung höher ist als die Priorität des HARQ-ACK:

das Uplink-Steuersignal einschließlich des HARQ-ACK auf einer ersten Uplink-Steuerkanalressource empfangen wird, die durch Anwenden eines bestimmten Offsets auf eine für die Scheduling-Anforderung zugewiesene Uplink-Steuerkanalressource bestimmt wird, basierend darauf, dass die Scheduling-Anforderung eine positive Scheduling-Anforderung ist, und
das Uplink-Steuersignal einschließlich des HARQ-ACK auf einer zweiten Uplink-Steuerkanalressource empfangen wird, die für das HARQ-ACK zugewiesen ist, basierend darauf, dass die Scheduling-Anforderung eine negative Scheduling-Anforderung ist.

10. Eine Basisstation (200), die umfasst:

einen Transceiver (206); und
einen Prozessor (202), der so konfiguriert ist, dass er den Transceiver (206) so steuert, dass er ein Uplink-Steuersignal empfängt (A10), in dem eine Scheduling-Anforderung und eine hybride automatische Wiederholungsanforderung-Bestätigung, HARQ-ACK, gemultiplext sind, und das Uplink-Steuersignal dekodiert (A15),
wobei die Scheduling-Anforderung sich auf ein erstes Uplink-Steuerkanalformat bezieht, das 2 Bit unterstützt, und die HARQ-ACK sich auf ein zweites Uplink-Steuerkanalformat bezieht, das sich vom ersten Uplink-Steuerkanalformat unterscheidet,
wobei die zyklische Verschiebung für das Uplink-Steuersignal auf der Grundlage eines anfänglichen zyklischen Verschiebungswerts des Uplink-Steuersignals bestimmt wird, und
wobei auf der Grundlage, dass das HARQ-ACK 2 Bit nicht überschreitet und eine Priorität der Scheduling-Anforderung höher ist als eine Priorität des HARQ-ACK:
das Uplink-Steuersignal einschließlich des HARQ-ACK auf einer ersten Uplink-Steuerkanalressource empfangen wird, die durch Anwenden eines bestimmten Offsets auf eine für die Scheduling-Anforderung zugewiesene Uplink-Steuerkanalressource bestimmt wird, basierend darauf, dass die Scheduling-Anforderung eine positive Scheduling-Anforderung ist, und
das Uplink-Steuersignal einschließlich des HARQ-ACK auf einer zweiten Uplink-Steuerkanalressource empfangen wird, die für das HARQ-ACK zugewiesen ist, basierend darauf, dass die Scheduling-Anforderung eine negative Scheduling-Anforderung ist.

**Revendications**

1. Procédé exécuté par un équipement utilisateur, UE, le procédé comprenant:

la génération (A05) d'un signal de commande de liaison montante dans lequel une requête d'ordonnancement et un accusé de réception de requête automatique de répétition hybride, HARQ-ACK, sont multiplexés; et
la transmission (A10) du signal de commande de liaison montante,
dans lequel la requête d'ordonnancement est liée à un premier format de canal de commande de liaison montante prenant en charge 2 bits, et le HARQ-ACK est lié à un deuxième format de canal de commande de liaison montante différent du premier format de canal de commande de liaison montante,
dans lequel le décalage cyclique pour le signal de commande de liaison montante est déterminé sur la base d'une valeur de décalage cyclique initiale du signal de commande de liaison montante, et
dans lequel, sur la base d'un HARQ-ACK ne dépassant pas 2 bits et d'une priorité de la requête d'ordonnancement supérieure à la priorité du HARQ-ACK:
le signal de commande de liaison montante comprenant le HARQ-ACK est mappé sur une première ressource de canal de commande de liaison montante qui est déterminée par application d'un décalage spécifique à une ressource de canal de commande de liaison montante attribuée pour la requête d'ordonnancement, étant donné que la requête d'ordonnancement est une requête d'ordonnancement positive, et
le signal de commande de liaison montante comprenant le HARQ-ACK est mappé sur une deuxième ressource de canal de commande de liaison montante attribuée au HARQ-ACK, étant donné que la requête d'ordonnancement est une requête d'ordonnancement négative.

2. Procédé selon la revendication 1, dans lequel la valeur de décalage cyclique initiale est égale à une valeur de décalage cyclique initiale utilisée pour transmettre la requête d'ordonnancement positive sans multiplexage avec le HARQ-ACK.

3. Procédé selon la revendication 1 ou 2, dans lequel une valeur de séquence pour le décalage cyclique est déterminée en fonction de la taille de la charge utile du HARQ-ACK.

4. Procédé selon la revendication 3, dans lequel:
étant donné que la taille de la charge utile du HARQ-ACK est de 1 bit, la valeur de la séquence est choisie parmi {0, 6}.

5. Procédé selon la revendication 3 ou 4, dans lequel:
étant donné que la taille de la charge utile du HARQ-ACK est de 2 bit, la valeur de la séquence est choisie parmi {0, 3, 6, 9}.

6. Support non transitoire lisible par un processeur sur lequel sont enregistrées des instructions qui, lorsqu'elles sont exécutées par un processeur d'un équipement utilisateur, amènent l'équipement utilisateur à exécuter le procédé selon l'une quelconque des revendications 1 à 5.

7. Équipement utilisateur comprenant:

un émetteur-récepteur (106),
une mémoire (104) configurée pour stocker les instructions; et
un processeur (102) configuré pour réaliser les opérations en exécutant les instructions,
dans lequel les opérations du processeur (102) comprennent:

la génération (A05) d'un signal de commande de liaison montante dans lequel une requête d'ordonnancement et un accusé de réception de requête automatique de répétition hybride, HARQ-ACK, sont multiplexés, et
la transmission (A10) du signal de commande de liaison montante; et
dans lequel la requête d'ordonnancement est liée à un premier format de canal de commande de liaison montante prenant en charge 2 bits, et le HARQ-ACK est lié à un deuxième format de canal de commande de liaison montante différent du premier format de canal de commande de liaison montante,
dans lequel le décalage cyclique pour le signal de commande de liaison montante est déterminé sur la base d'une valeur de décalage cyclique initiale du signal de commande de liaison montante, et

dans lequel, sur la base d'un HARQ-ACK ne dépassant pas 2 bits et d'une priorité de la requête d'ordonnancement supérieure à la priorité du HARQ-ACK:

le signal de commande de liaison montante comprenant le HARQ-ACK est mappé sur une première ressource de canal de commande de liaison montante qui est déterminée par application d'un décalage spécifique à une ressource de canal de commande de liaison montante attribuée pour la requête d'ordonnancement, étant donné que la requête d'ordonnancement est une requête d'ordonnancement positive, et

le signal de commande de liaison montante comprenant le HARQ-ACK est mappé sur une deuxième ressource de canal de commande de liaison montante attribuée au HARQ-ACK, étant donné que la requête d'ordonnancement est une requête d'ordonnancement négative.

8. Équipement utilisateur selon la revendication 7, l'équipement utilisateur étant configuré pour exécuter le procédé selon l'une quelconque des revendications 1 à 5.

9. Procédé exécuté par une station de base, BS, le procédé comprenant:

la réception (A10) d'un signal de commande de liaison montante dans lequel une requête d'ordonnancement et un accusé de réception de requête automatique de répétition hybride, HARQ-ACK, sont multiplexés; et

le décodage (A15) du signal de commande de liaison montante,

dans lequel la requête d'ordonnancement est liée à un premier format de canal de commande de liaison montante prenant en charge 2 bits, et le HARQ-ACK est lié à un deuxième format de canal de commande de liaison montante différent du premier format de canal de commande de liaison montante,

dans lequel le décalage cyclique pour le signal de commande de liaison montante est déterminé sur la base d'une valeur de décalage cyclique initiale du signal de commande de liaison montante, et

dans lequel, sur la base d'un HARQ-ACK ne dépassant pas 2 bits et d'une priorité de la requête d'ordonnancement supérieure à la priorité du HARQ-ACK:

le signal de commande de liaison montante comprenant le HARQ-ACK est reçu sur une première ressource de canal de commande de liaison montante qui est déterminée par application d'un décalage spécifique à une ressource de canal de commande de liaison montante attribuée pour la requête d'ordonnancement, étant donné que la requête d'ordonnancement est une requête d'ordonnancement positive, et

le signal de commande de liaison montante comprenant le HARQ-ACK est reçu sur une deuxième ressource de canal de commande de liaison montante attribuée au HARQ-ACK, étant donné que la requête d'ordonnancement est une requête d'ordonnancement négative.

10. Station de base (200) comprenant:

un émetteur-récepteur (206); et

un processeur (202) configuré pour amener l'émetteur-récepteur (206) à recevoir (A10) un signal de commande de liaison montante dans lequel une requête d'ordonnancement et un accusé de réception de requête automatique de répétition hybride, HARQ-ACK, sont multiplexés, et pour décoder (A15) le signal de commande de liaison montante,

dans lequel la requête d'ordonnancement est liée à un premier format de canal de commande de liaison montante prenant en charge 2 bits, et le HARQ-ACK est lié à un deuxième format de canal de commande de liaison montante différent du premier format de canal de commande de liaison montante,

dans lequel le décalage cyclique pour le signal de commande de liaison montante est déterminé sur la base d'une valeur de décalage cyclique initiale du signal de commande de liaison montante, et

dans lequel, sur la base d'un HARQ-ACK ne dépassant pas 2 bits et d'une priorité de la requête d'ordonnancement supérieure à la priorité du HARQ-ACK:

le signal de commande de liaison montante comprenant le HARQ-ACK est reçu sur une première ressource de canal de commande de liaison montante qui est déterminée par application d'un décalage spécifique à une ressource de canal de commande de liaison montante attribuée pour la requête d'ordonnancement, étant donné que la requête d'ordonnancement est une requête d'ordonnancement positive, et

le signal de commande de liaison montante comprenant le HARQ-ACK est reçu sur une deuxième ressource de canal de commande de liaison montante attribuée au HARQ-ACK, étant donné que la requête d'ordonnancement est une requête d'ordonnancement négative.

# FIG. 1

| Initial Cell Search | System Information Reception | Random Access Procedure | General DL/UL Tx/Rx |
|---|---|---|---|

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |
|---|---|---|---|---|---|---|---|

S11    S12    S13    S14    S15    S16    S17    S18

• DL/UL ACK/NACK
• UE CQI/PMI/Rank Report using PUSCH and PUCCH

# FIG. 2

# FIG. 3

## FIG. 4

## FIG. 5

# FIG. 6

UL grant-to-PUSCH offset (K2)

PDCCH

PUSCH

# FIG. 7

| | PUSCH DM-RS |
| | HARQ-ACK RE |
| | CSI part 1 |
| | CSI part 2 |
| | UL-SCH |

# FIG. 8

Determine PF for SR (UCI 1) — 805

UCI 2 ? — 810

N → (Normal) PUCCH transmission based on the determined PF (as described in Table 5/6) — 815

Y

SR of UCI 1 is HP SR ? — 820

N → UCI 2 is 1or 2-bit A/N? — 830

Y

Proposed Multiplexing for the Higher SR protection (e.g., FIG. 9) — 825

Y

UCI 2 is PF0 or PF1 — 835

PF1 → PF1 based PUCCH transmission including A/N(s) (SR of UCI 1 is dropped, if UCI 1 = PF0) (as described in Table 7) — 840

PF0

Legacy UCI Multiplexing (as described in Table 7/8) — 845

# FIG. 9

Determine CS value $(m_0, m_{cs})$ for transmitting UCI 1 + 2 multiplexed PUCCH (PF0)
- $m_0$ = m0 for UCI 1
- $m_{cs} \in \{0, 6\}$ (for 1-bit A/N of UCI 2) / $m_{cs} \in \{0, 3, 6, 9\}$ (for 1-bit A/N of UCI 2)

— 905

SR of UCI 1 is Positive ?  — 910

Positive SR

Negative SR

Select UCI 2 Resource
for transmitting
UCI 1 + 2 multiplexed PUCCH (PF0)  — 915

Select UCI 1 Resource
for transmitting
UCI 1 + 2 multiplexed PUCCH (PF0)  — 920

Mapping A/N bit(s) of UCI 2 on the Selected Resource
based on PF0 Sequence configured with the determined CS value $(m_0, m_{cs})$  — 930

EP 4 236 558 B1

# FIG. 10

# FIG. 11

# FIG. 12

108    208

100    200

First Device

102 — Processor(s)    Transceiver(s)

Memory(s)

104    106

Second Device

Transceiver(s)    Processor(s)    — 202

Memory(s)

206    204

# FIG. 13

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 14

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108   208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

# FIG. 15

◄ On Duration ►◄ Opportunity for DRX ►

UE shall monitor
PDCCH →

◄ DRX Cycle ►

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ERICSSON**. On PUCCH Remaining Issues. *3GPP DRAFT;R1-1807252*, 20 May 2014
- **ERICSSON**. Summary of Overlapped PUCCH Resources. *3GPP DRAFT;R1-1807662*, 24 May 2018
- **PANASONIC**. Discussion on PUCCH overlap issues. *3GPP DRAFT;R1-1806180*, 20 May 2018
- **VIVO**. Discussion on short PUCCH for eMBB. *3GPP DRAFT;R1-1806060*, 20 May 2018